# EUROPEAN PATENT APPLICATION

(11) **EP 4 729 794 A1**
(43) Date of publication of application: **22.04.2026**
(21) Application number: 25209382.8
(22) Date of filing: 17.10.2025
(51) Int. Cl.: F16B 25/10, F16B 25/00

(54) **SELF-DRILLING SCREW**

(30) Priority: 18.10.2024 TW 113139806
(71) Applicant: Chao, Ying-Chin, Kaohsiung City 82443 (TW)
(72) Inventor: Chao, Ying-Chin, Kaohsiung City 82443 (TW)
(74) Representative: Marks & Clerk LLP

(57) **Abstract**

A self-drilling screw includes a head (2), a thread shank (3) and a pilot end (4). The thread shank (3) includes a shank body (31) and a thread portion (32). The thread shank (31) is cut with cutting grooves (33) extending axially from the shank body (31) and formed by cutting through the thread portion (32) into the shank body. The pilot end (4) is gradually tapered, and defines two chip-clearing flutes (41) formed by cutting and extending over the thread portion (32) and the pilot end (4) and by cutting and extending through a portion of the pilot end (4). Each chip-clearing flute (41) is in communication with the corresponding cutting groove (33). Each cutting groove (33) partially overlaps the corresponding chip-clearing flute (41) at the normal vector projection to enhance chip removal.

## Description

The disclosure relates to a self-drilling screw, and more particularly to a self-drilling screw for fastening a thick steel plate or a thick wooden material, and being capable of clearing and collecting chips.

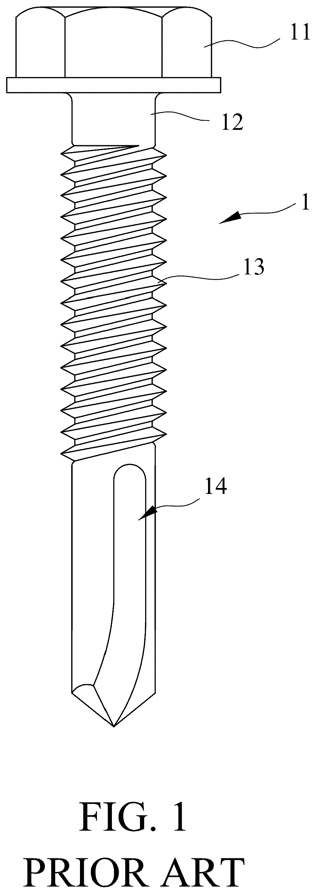

Referring to FIG. 1, a conventional self-drilling screw 1 includes a head 11, a threaded shank 12 extending downwardly from the head 11 and having a flat or tapered pilot end, and a thread portion 13 projecting from an outer peripheral surface of the threaded shank 12 and extending spirally. The threaded shank 12 has two chip-clearing flutes 14 (only one is shown) located at the pilot end and axially extending. When screwing the self-drilling screw 1 into a metal or a wooden material, chips and shavings are removed from the chip-clearing flutes 14 to reduce resistance to the drilling process. However, the chip-clearing flutes 14 only exist in the pilot end, and therefore provide limited chip removal efficiency for the self-drilling screw 1 and fail to completely collect the chips.

Moreover, the length of each of the chip-clearing flutes 14 is related to the thickness of a workpiece that the self-drilling screw 1 may screw into, and the thickness of the workpiece is directly related to the structural strength of a component. Due to the current technical limitations in the industry, the lengths of the chip-clearing flutes 14 does not meet user expectations in simultaneously ensuring drilling quality and the structural strength of the component.

Therefore, an object of the disclosure is to provide a self-drilling screw that can alleviate at least one of the drawbacks of the prior art and that is capable of clearing and collecting chips.

According to an aspect of the disclosure, there is provided a self-drilling screw according to claim 1.

With the chip-clearing flutes in communication with the cutting grooves, chip removal of the self-drilling screw during the screwing process is enhanced, the space for collecting the chips is greatly increased, and the torque required for screwing is reduced, which saves time and efforts.

Other features and advantages of the disclosure will become apparent in the following detailed description of the embodiments with reference to the accompanying drawings. It is noted that various features may not be drawn to scale.
FIG. 1 is a front view of a conventional self-drilling screw.
FIG. 2 is a front view illustrating a first embodiment of a self-drilling screw according to the disclosure.
FIGS. 3 to 5 are front views illustrating the first embodiment with a pilot end in a variety of shapes.
FIG. 6 is a front view illustrating the first embodiment in a modified form.
FIG. 7 is a side view illustrating the first embodiment taken from another angle.
FIG. 8 is a bottom view illustrating the first embodiment with the pilot end in a first form.
FIG. 9 is a bottom view illustrating the first embodiment with the pilot end in a second form.
FIG. 10 is a bottom view illustrating the first embodiment with the pilot end in a third form.
FIG. 11 is a bottom view illustrating the first embodiment with the pilot end in a fourth form.
FIG. 12 is a side view illustrating the first embodiment in another modified form.
FIG. 13 is a front view illustrating the first embodiment in still another modified form.
FIG. 14 is a front view illustrating a second embodiment of the self-drilling screw according to the disclosure.
FIG. 15 is a front view illustrating a third embodiment of the self-drilling screw according to the disclosure.
FIG. 16 is a side view illustrating the third embodiment taken from another angle.
FIGS. 17 and 18 are front views illustrating a fourth embodiment of the self-drilling screw according to the disclosure.
FIGS. 19 to 23 are front views illustrating the fourth embodiment in a variety of modified forms.
FIG. 24 is a front view illustrating a fifth embodiment of the self-drilling screw according to the disclosure.
FIG. 25 is a front view illustrating a sixth embodiment of the self-drilling screw according to the disclosure.
FIG. 26 is a front view illustrating a seventh embodiment of the self-drilling screw according to the disclosure.
FIG. 27 is a front view illustrating an eighth embodiment of the self-drilling screw according to the disclosure.
FIG. 28 is a front view illustrating a ninth embodiment of the self-drilling screw according to the disclosure.
FIG. 29 is a front view illustrating a tenth embodiment of the self-drilling screw according to the disclosure.
FIG. 30 is a front view illustrating an eleventh embodiment of the self-drilling screw according to the disclosure.
FIGS. 31 and 32 are sectional views illustrating a cutting groove of the self-drilling screw according to the disclosure.
FIG. 33 is a front view illustrating the first embodiment of the self-drilling screw with a cutting groove having an inclined corner.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

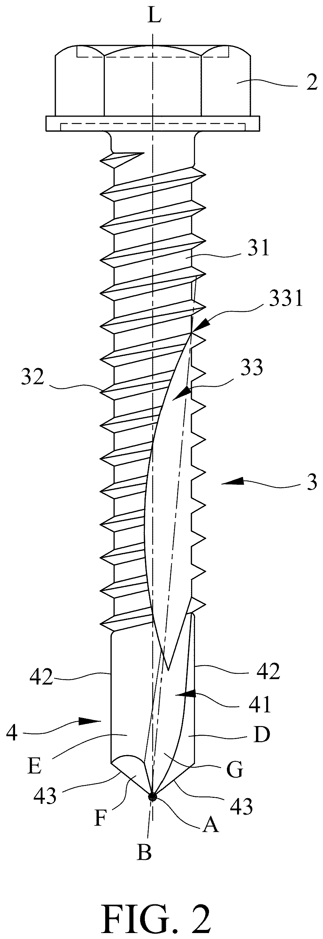

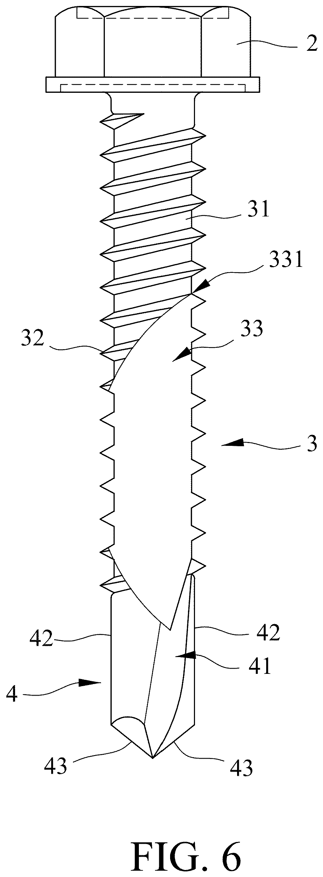

Referring to FIGS. 2 to 7, a first embodiment of a self-drilling screw according to the disclosure includes a head 2, a thread shank 3 axially connected with the head 2, and a pilot end 4 axially connected with the thread shank 3. The thread shank 3 includes a shank body 31 which is connected with the head 2, and a thread portion 32 which projects from an outer peripheral surface of the shank body 31 and which extends spirally along the shank body 31. The thread shank 3 is cut with two cutting grooves 33 which extend axially from the shank body 31 and which are formed by cutting through the thread portion 32 into the shank body 31 and a portion of the pilot end 4 (only one side thereof is shown in FIGS. 2 to 6). The cutting grooves 33 are formed in pairs and are parallel to or non-parallel to each other. Each cutting groove 33 is of a curved shape or a demi-lune shape, and is formed at the shank body 31 distal from the head 2. Alternatively, the cutting grooves 33 may be straight grooves. The pilot end 4 extends axially from the shank body 31 away from the head 2 and is gradually tapered to terminate at a tip (A). The pilot end 4 defines two chip-clearing flutes 41 which are respectively in communication with the cutting grooves 33 and which face in different directions. Each chip-clearing flute 41 extends axially along the thread shank 3 and over the pilot end 4. It is noted that each chip-clearing flute 41 may extend axially and be gradually tapered from the tip (A) toward the shank body 31 and over the pilot end 4, or may extend axially from the tip (A) toward the shank body 31 with a fixed width and over the pilot end 4. For example, in the drawings, a chip-clearing flute 41 extending axially and gradually tapered from the tip (A) toward the shank body 31 and over the pilot end 4 is shown. It should be noted that the term "communication" is not limited to surfaces of the cutting grooves 33 being directly engaged with surfaces of the chip-clearing flutes 41, it also indicates that the cutting grooves 33 may be in spatial communication with the corresponding chip-clearing flutes 41 partially. In short, when being projected radially in the front view, i.e., a normal vector projection on a 2-D imaginary plane, areas of the overlapping projections of the cutting grooves 33 and the chip-clearing flutes 41 may improve chip removal. All embodiments of the disclosure apply this concept and will not be described in detail. It is noted that the cutting grooves 33 may be open-type grooves or channel-type grooves. The channel-type groove has a channel bordered by the thread portion 32 at left and right sides thereof so the channel-type groove has poorer chip removal and collection, which affects the drilling into a thick metal plate because of higher resistance. Hence, all embodiments of the disclosure are illustrated with the open-type cutting grooves. An open-type cutting groove has at least one side not bordered by the thread portion 32. Alternatively, the left and right sides of the cutting groove 33 are surrounded by the thread portion 32, and the width of the cutting groove 33 overlaps the corresponding chip-clearing flute 41 in at least two regions. As such, a large chip removal space is provided and is in communication with the external environment, which enables rapid chip removal and prevents the chip clearing flutes 41 and the cutting grooves 33 from being blocked. Each cutting groove 33 may have a fixed width or a variable width.

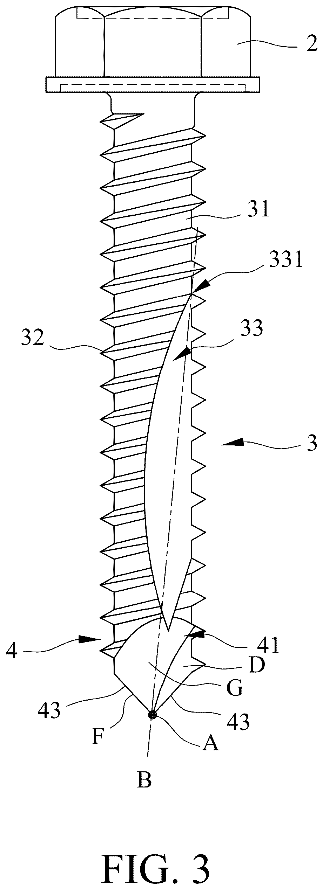

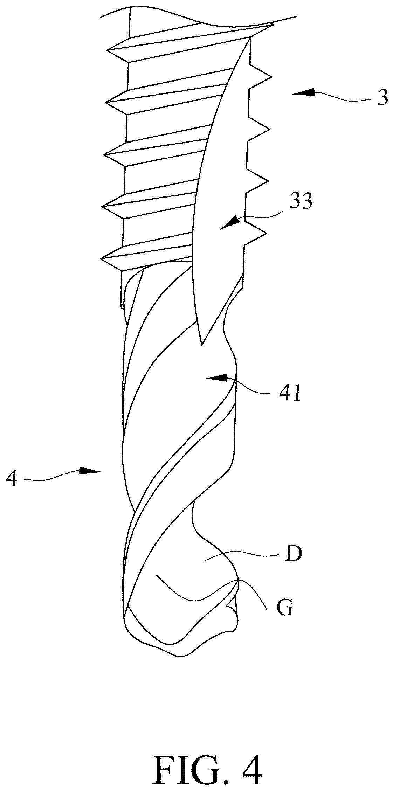

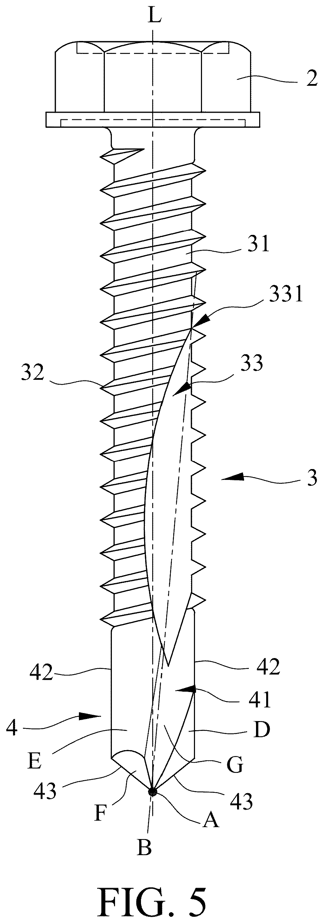

With reference to FIG. 2 to FIG. 9, the pilot end 4 is composed of two curve surfaces (E), two inclined surfaces (G), two bottom surfaces (D) and two cutting edge surfaces (F). Each of the chip-clearing flutes 41 is defined by the inclined surface (G), the bottom surface (D), the cutting edge surface (F) and the curve surface (E). The pilot end 4 may be configured in a variety of forms by adjusting the areas and relative proportions of the inclined surface (G), the bottom surface (D), the curve surface (E) and the cutting edge surface (F) in accordance with the design of the disclosure. For example, the pilot end 4 may have a flat (see FIG. 2), cylindrical (see FIG. 3) or spiral shape (see FIG. 4), or the bottom surface (D) of the pilot end 4 may be smaller than the inclined surface (G) of the pilot end 4 (see FIG. 5). The chip-clearing flutes 41 of the pilot end 4 may be surrounded by the thread portion 32 (see FIG. 3), or may be not surrounded by the thread portion 32. In this embodiment, the pilot end 4 has a flat shape and is free of the thread portion 32 (see FIG. 2). Additionally, when being projected radially in a radial direction (a or β) perpendicular to the surfaces of the cutting grooves 33 (i.e., the normal vector in the front view or the normal vector to the bottom surface (D)), optimal chip removal occurs when each cutting groove 33 overlaps the corresponding element (i.e., the curve surface (E), the inclined surface (G) and the bottom surface (D)) of the corresponding chip clearing flute 41. Hence, the greater the overlapping areas, i.e., the areas of the overlapping projections, the better the chip removal. In short, in the first embodiment, when the two cutting grooves 33 are spatially projected, one cutting groove 33 overlaps the curve surface (E), the inclined surface (G) and the bottom surface (D) of the corresponding chip-clearing flute 41, and the other cutting groove 33 overlaps the curve surface (E) and the inclined surface (G) of the corresponding chip-clearing flute 41. It is noted that the two chip-clearing flutes 41 are opened and oriented in the same opening direction in the front view, i.e., in the right direction in this embodiment. The inclined surface (G) is a boundary region where one side linearly intersects the curve surface (E) and the other side linearly intersects the bottom surface (D). This region may be designed to be either a flat surface or a curved surface.

The characteristic of the disclosure is that each of the cutting grooves 33 partially overlaps the corresponding chip-clearing flute 41 without the need to overlap all elements of the chip-clearing flute 41, which may greatly improve chip removal of the screw. Moreover, one of the cutting grooves 33 overlaps the corresponding chip-clearing flute 41 in an overlapping area which may partially or fully coincide with an overlapping area where the other one of the cutting grooves 33 overlaps the corresponding chip-clearing flute 41. It is noted that the cutting grooves 33 overlap the corresponding chip-clearing flutes 41 to meet the requirements of the disclosure. Typically, the overlapping area where each cutting groove 33 overlaps the corresponding chip-clearing flute 41 has a length which is 1/3 to 1/2 of a length of the pilot end 4. In practice, this overlapping length may be adjusted based on the thickness of the pilot end 4. Further details are omitted herein. Moreover, the overlapping area may start at the midpoint of the intersecting line between the curve surface (E) and the inclined surface (G) in case where the length of the pilot end 4 is exceptionally long or the difference of thickness between the tip (A) and the threaded portion 32 is great. The cutting performance and chip removal efficiency may be further enhanced with this design.

It is noted that each cutting groove 33 and the corresponding chip-clearing flute 41 extends along an extending line (B) which is defined to interconnect an upper cutting point 331 of the cutting groove 33 and the tip (A) of the pilot end 4 when being projected onto the imaginary plane. The positional relationship between the chip-clearing flutes 41 and the cutting grooves 33 may be determined by the position and orientation of the extending line (B). In the front view (a radial projection, i.e., projected radially) of the first embodiment, two extending lines (B) are parallel to or overlap each other in the projection.

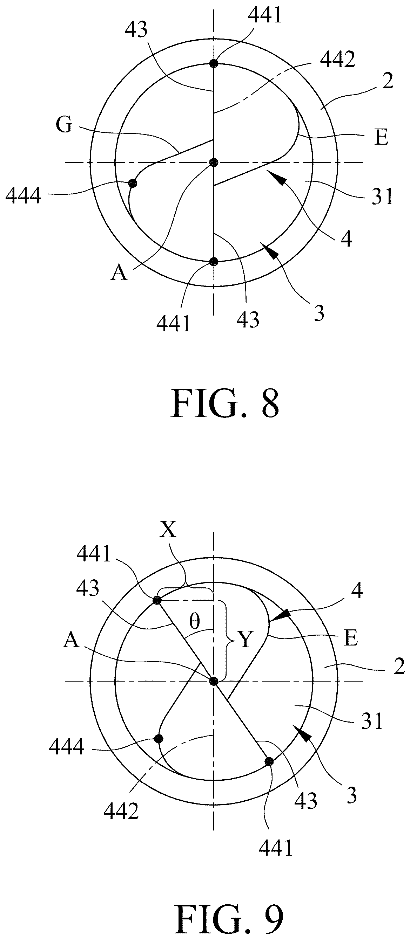

With reference to FIGS. 2, 8, 9, 12 and 13, the pilot end 4 has two lateral cutting edges 42 which are connected with the shank body 31 and which extend axially along the thread shank 3, and two primary cutting edges 43 which are connected with the respective lateral cutting edges 42 at an end and which are connected with each other at the other end. Each primary cutting edge 43 extends in the radial direction of the thread shank 3 and is inclined relative to the thread shank 3. The junction of the primary cutting edges 43 is formed as the tip (A). The junction of each lateral cutting edge 42 and the corresponding primary cutting edge 43 has an endpoint 441. In the first embodiment, the endpoints 441, the primary cutting edges 43 and the tip (A) are aligned along the same line, as shown in FIG. 8. When being projected radially along the thread shank 3, one cutting groove 33 overlaps the curve surface (E), the inclined surface (G) and the bottom surface (D) of the corresponding chip-clearing flute 41 to achieve a good overlapping area, and the other cutting groove 33 overlaps the curve surface (E) and the inclined surface (G) of the corresponding chip-clearing flute 41 to achieve a good overlapping area. In another form of the pilot end 4 as shown in FIG. 9, with the tip (A) being rotated by a certain angle, such configuration of the pilot end 4 offers advantages in machining and lower costs. That is to say, an opening direction of the cutting grooves 33 forms a predetermined rotational angle with a bottom of the pilot end 4. Specifically, the screw may be rotated by an angle (θ) as required, where the angle (θ) is equal to tan⁻¹ (length X/length Y). The angle (θ) is an angle by which the endpoints 441 and a point 444 are rotated when the endpoints 441 and a point 444 lie on a same plane, where the point 444 is the highest point on either the curve surface (E), the inclined surface (G), or the cutting edge surface (F). The location of the highest point may be determined by molding, and is typically at the intersection among the inclined surface (G), the curve surface (E) and the cutting edge surface (F). With such rotation, the chip-clearing flutes 41 and the cutting grooves 33 may achieve a greater area of overlapping projection. By virtue of the cutting grooves 33 being in communication with the chip-clearing flutes 41, the drilling and screwing capability and the chip removal efficiency during the drilling process may be further enhanced, and the torque required for screw fastening may be reduced to save time, efforts and power, thereby being environmentally friendly. Furthermore, each chip-clearing flute 41 extends axially from the tip (A) toward the shank body 31 with a fixed width and over the pilot end 4, where the fixed width indicates that any point on the intersecting line between the curve surface (E) and the inclined surface (G) is equidistant from the lateral cutting edge 42.

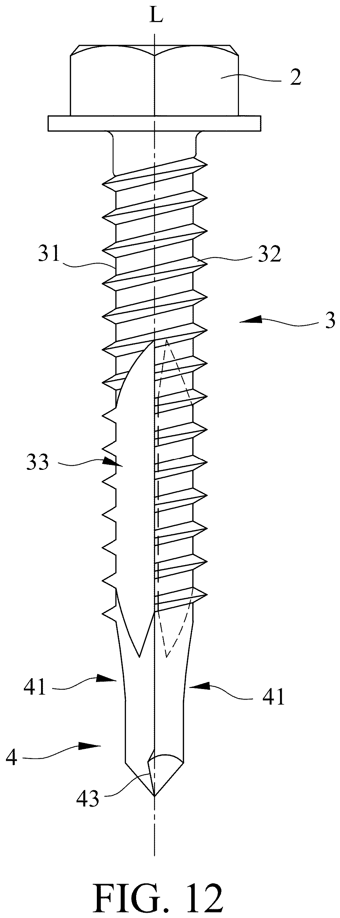

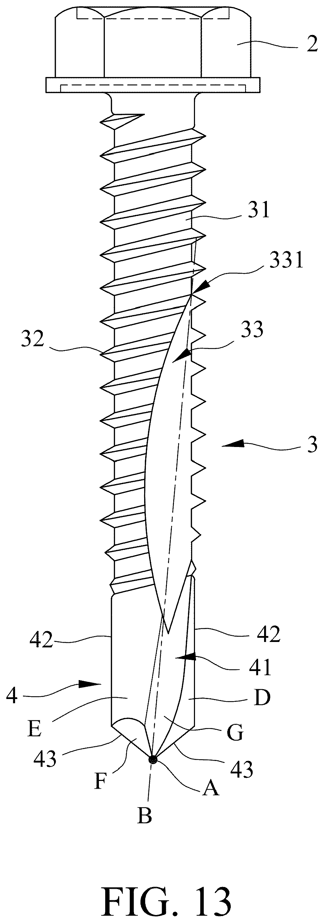

FIG. 8 and FIG. 9 respectively illustrate the first form and the second form of the pilot end 4 of the first embodiment. It is noted that the thread portion 32 may be designed with a variable outer diameter. For example, the thread portion 32 has a proximal section which is proximal to the pilot end 4 and which is gradually tapered (as shown in FIG. 13). Hence, when being screwed into a hard material such as a steel plate, during the screwing-in process from the pilot end 4 to the thread portion 32, a drastic increase in a resistance caused by excessive changes in an outer diameter of the thread portion 32 is prevented so as to avoid unsmooth engagement and screwing failure. The reduction in ratio of the outer diameter may vary depending on the thickness of the object being fastened and the thickness of the pilot end 4. The detailed description thereof is omitted. In some embodiments, the proximal section of the thread portion 32 is gradually tapered to have a width the same as a width at a junction between the pilot end 4 and the thread portion 32. Moreover, the primary cutting edges 43 may be curved upwardly at outer edges thereof, as shown in FIG. 12, to accommodate different operational requirements. Although the primary cutting edges 43 are curved upwardly at the outer edges thereof, the endpoints 441 are regarded to be on the same line as the primary cutting edges 43 in the disclosure. Hence, this interpretation applies to all embodiments of the disclosure and is repeated, and detailed descriptions thereof will be omitted.

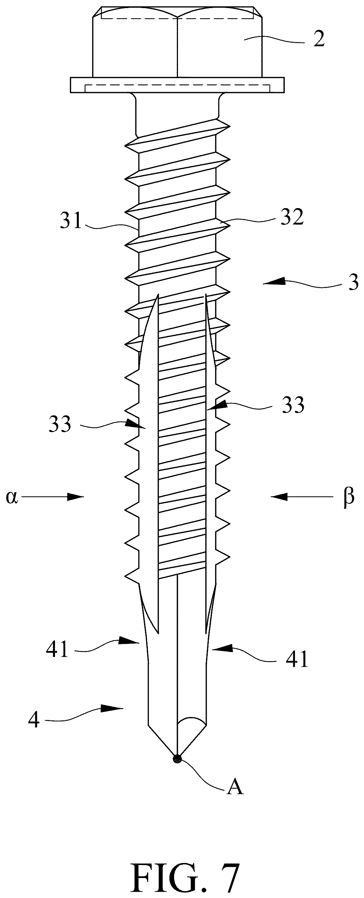

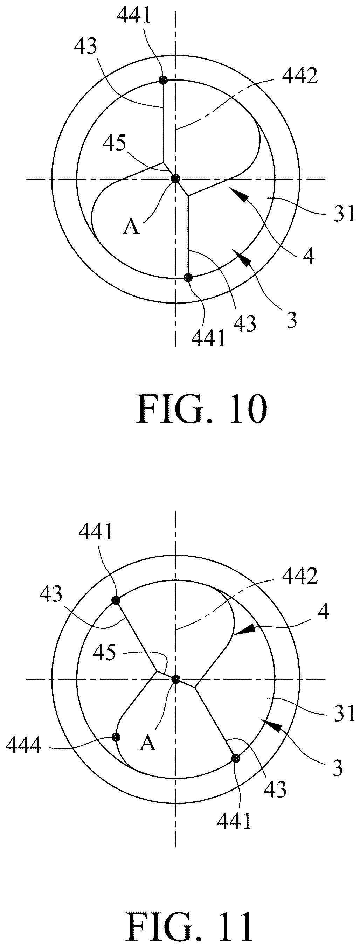

With reference to FIGS. 2, 10 and 11, which illustrate the third form and the fourth form of the pilot end 4 of the first embodiment, the primary cutting edges 43 are not connected with each other, or are not aligned with each other on the same line, and the pilot end 4 further includes a transverse cutting edge 45 which interconnects the primary cutting edges 43. The primary cutting edges 43 and the transverse cutting edge 45 extend radially of the thread shank 3. Each primary cutting edge 43 intersects the transverse cutting edge 45 with an included angle. In the third form and the fourth form of the pilot end 4, the endpoints 441 and the primary cutting edges 43 are aligned on the same line (or on the same plane), and the two lines (or planes) are parallel or non-parallel to each other as required. The two lines are connected with each other through the transverse cutting edge 45. The endpoints 441, the primary cutting edges 43 and the transverse cutting edge 45 are not on a same horizontal line (or plane) in the third form of the first embodiment, which is different from the first and second forms of the pilot end 4 as shown in FIGS. 8 and 9. Such configuration of the pilot end 4 (with the primary cutting edges 43 and the transverse cutting edge 45) may be rotated as required to be the fourth form as shown in FIG. 11. That is to say, the endpoints 441 and the point 444 are on the same plane. Such fourth form of the pilot end 4 also offers the advantage of low cost and ease of processing. It is noted that, regardless of which form of the pilot end 4 is used in the first embodiment, the cutting grooves 33 are in communication with the chip-clearing flutes 41 or overlap the chip-clearing flutes 41 in projection, and hence the chip removal efficiency may be achieved. The different forms of the pilot end 4 serve to meet the requirements of safety and a stable quality. It is noted that, in the third and fourth forms of the pilot end 4 of the screw, the thread portion 32 may be designed with a variable outer diameter. For example, the thread portion 32 has a proximal section which is proximal to the pilot end 4 and which is gradually tapered (as shown in FIG. 13). Hence, when being screwed into a hard material such as a steel plate, during the screwing-in process from the pilot end 4 to the thread portion 32, a drastic increase in a resistance caused by excessive changes in an outer diameter is prevented so as to avoid unsmooth engagement and screwing failure. Furthermore, the primary cutting edges 43 may be curved upwardly at outer edges thereof, as shown in FIG. 12, to accommodate different operational requirements. It should be noted that, when the spatial projections of the cutting grooves 33 from the front view or the side view being aligned with the axial line (L) on the same plane, the cutting grooves 33 may be parallel to the axial line (L) (as shown in FIG. 7 and FIG. 12) or form an included angle (or be inclined to) with the axial line (L). It is noted that, when the cutting grooves 33 form an included angle with the axial line (L), the cutting grooves 33 may be oriented in the same opening direction as or opposite to the thread portion 32. This applies to all embodiments of the disclosure and is repeated, and detailed descriptions thereof will be omitted.

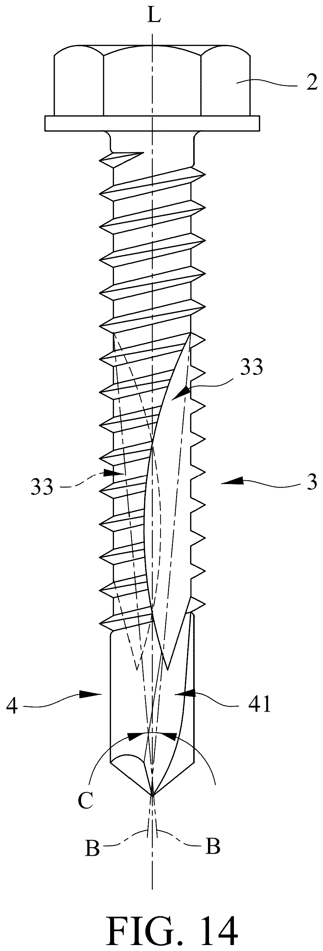

With reference to FIG. 14, in a second embodiment of the self-drilling screw, the two cutting grooves 33 overlap the corresponding chip-clearing flutes 41 at the projection. The cutting grooves 33 are oriented at the opposite opening directions, such as in a left-right direction in the front view. Moreover, the pilot end 4 may be designed to be in either a rotating configuration or a non-rotating configuration to offer consumers with a wider range of choices. In this embodiment, when the spatial projections of the cutting grooves 33 in the side view lie in the same plane as the axial line (L), the cutting grooves 33 may be parallel to the axial line (L) (as shown in FIG. 12), or form an included angle with the axial line (L) (not shown). It should be noted that, when the cutting grooves 33 form an included angle with axial line (L), the cutting grooves 33 may be oriented in the same opening direction as or opposite to the thread portion 32.

Each cutting groove 33 has a depth which is no more than a difference between a peak of the thread portion 32 and the bottom surface (D) of the corresponding chip-clearing flute 41. In terms of the front view of the screw, when the openings of the cutting grooves 33 face laterally and in opposite directions, the cutting depth of the cutting grooves 33 extend at least into the shank body 31. The maximum depth may be equivalent to half the outer diameter of the thread portion 32, or no greater than half the width of the pilot end 4. When the openings of the cutting grooves face in the same direction, the cutting depth of the cutting grooves 33 extend at least into the shank body 31. The maximum depth may be equivalent to the outer diameter of the thread portion 32. The spacing between the two cutting grooves 33 is not less than 1/4 of a diameter of the thread portion 32 at the root thereof, and is not less than 1/4 of the thickness at the thickest portion of the pilot end 4, so as to maintain the strength of the screw. In some embodiments, the spacing for maintaining the strength corresponds to the distance between two lowest points on the intersecting lines where the respective curve surface (E) intersects the inclined surface (G) before rotation of the pilot end 4. A better balance between production efficiency and strength corresponds to the distance between the planes of the two chip-clearing flutes 41 after the pilot end 4 is rotated by an angle (θ).

In terms of the front view of the screw, when the openings of the cut grooves 33 face forward and rearward, regardless of whether the openings face in the same direction or opposite directions, the cutting depth of the cutting grooves 33 is greater than that of the thread portion 32. In some embodiments, the maximum depth is not more than half of the outer diameter of the screw.

It is noted that, when being projected radially in the front view of the first embodiment, two extending lines (B) intersect each other with an included angle (C) therebetween in the projection. When the projections are non-overlapping with a smaller included angle (C), the screw may drill into a thicker material. Furthermore, with the included angle (C), quality control of the production may be ensured to be consistent. In short, for screws with the same dimension, keeping the included angle (C) consistent may ensure that the relative positions of the cutting groove 33 and the chip-clearing flute 41 are identical each time.

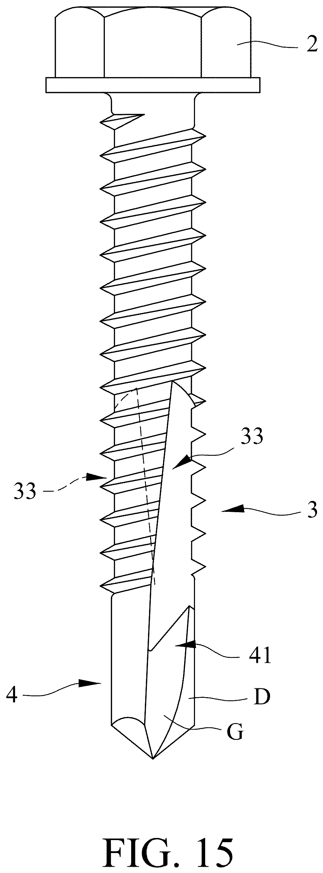

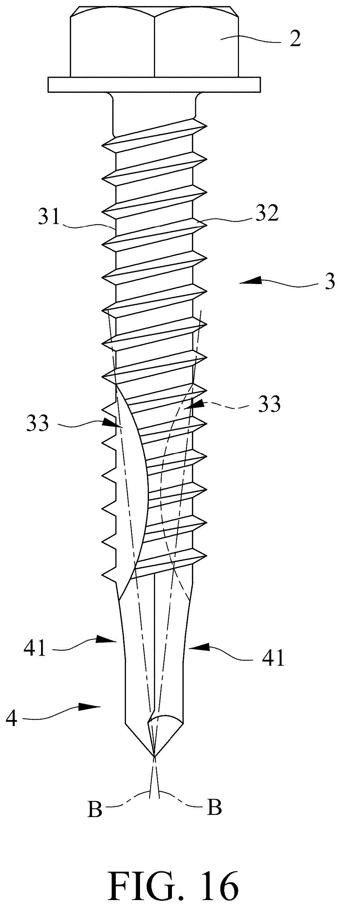

With reference to FIGS. 15 and 16, in a third embodiment, in the front view of FIG. 15, the openings of the cutting grooves 33 are front and rear openings, and the opening directions of the cutting grooves 33 are opposite to each other. In this embodiment, each cutting groove 33 overlaps the inclined surface (G) and the bottom surface (D) of the corresponding chip-clearing flute 41.

Moreover, in a side view of the third embodiment, two extending lines (B) intersect each other with an included angle therebetween in the radial projection.

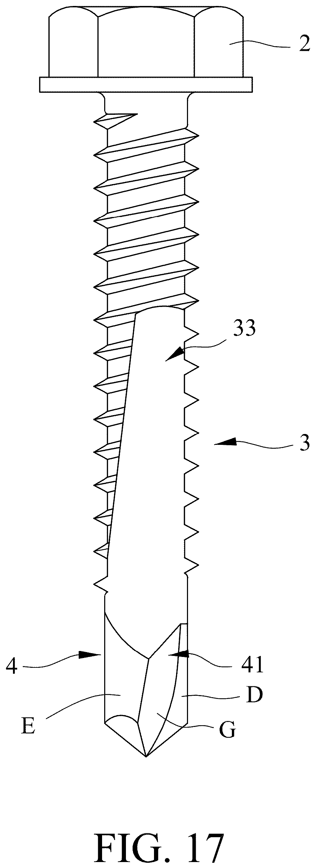

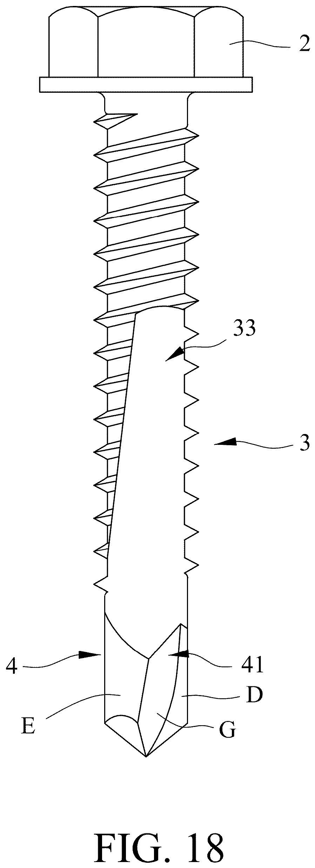

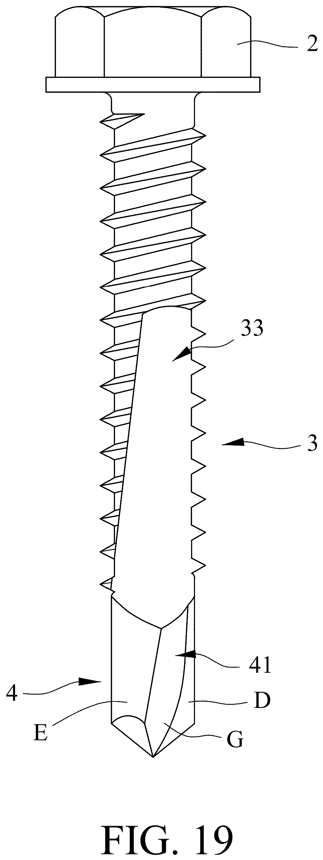

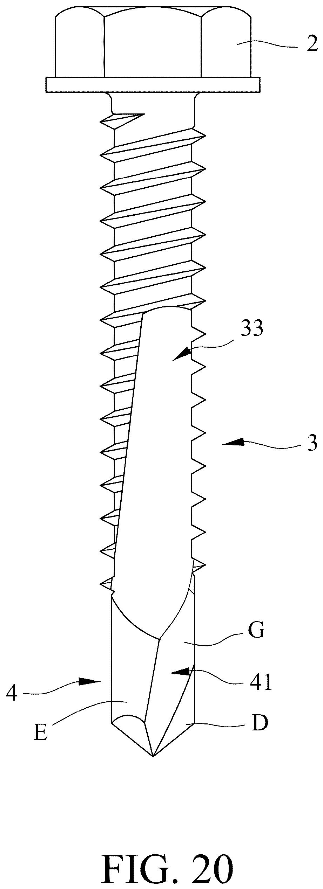

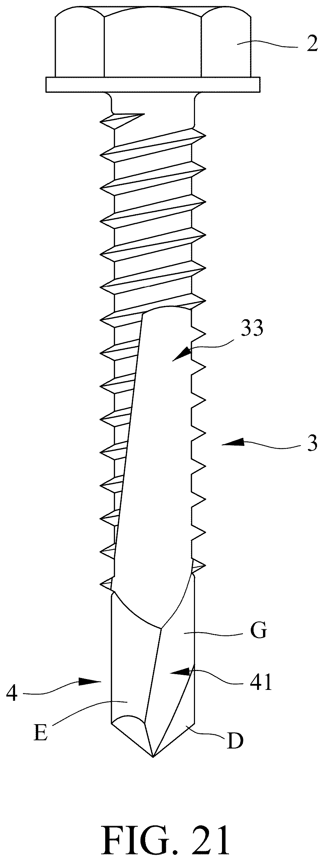

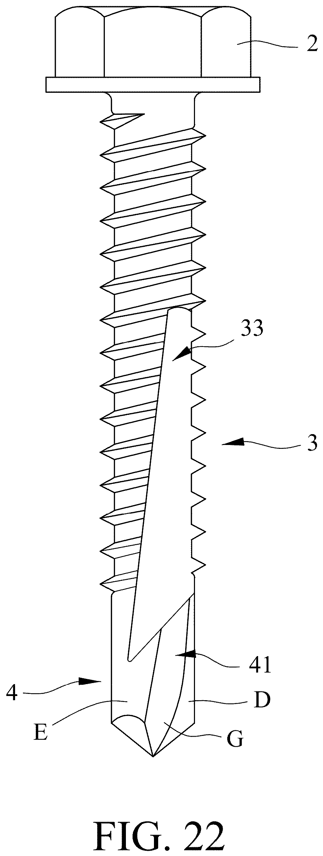

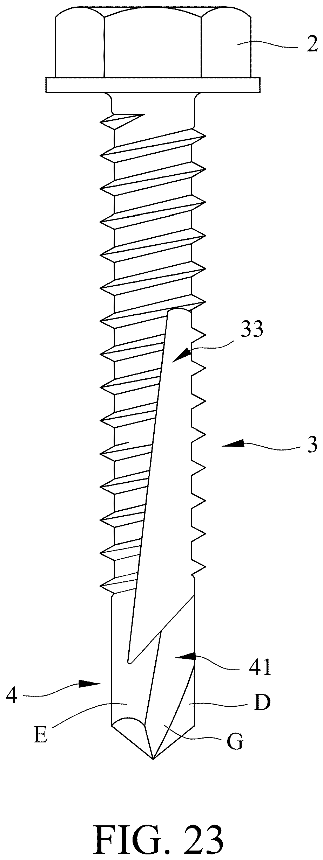

With reference to FIGS. 17 to 23, which illustrate the fourth embodiment of the self-drilling screw, similar to the third embodiment, the openings of the cutting grooves 33 are front and rear openings, and the opening directions of the cutting grooves 33 are opposite to each other, as shown in FIGS. 17 and 18 in the front view. In this embodiment, each cutting groove 33 overlaps the curve surface (E), the inclined surface (G) and the bottom surface (D) of the corresponding chip-clearing flute 41. It is noted that the cutting grooves 33 have a variable width in the region where the projections overlap along the axial direction toward the head 2. In FIGS. 17 and 18, only one cutting groove 33 is shown. It is noted that the cutting grooves 33 are illustrated with deep cutting configurations in FIGS. 17 and 18, where bottom edges of the cutting grooves 33 extend to the curve surfaces (E), the inclined surface (G) and the bottom surfaces (D). That is to say, the cutting grooves 33 are formed by cutting a depth beyond the bottom surface (D). The cutting grooves 33 are illustrated with shallow cutting configurations in FIGS. 19, 20 and 21 where bottom edges of the cutting grooves 33 extend to the curve surfaces (E) and the inclined surface (G). Specifically, in FIG. 19, the cutting grooves 33 are physically in communication with the curve surfaces (E) and the inclined surfaces (G) while being communicated with the bottom surfaces (D) in overlapping projections. In FIGS. 20 and 21, the cutting grooves 33 are merely and physically in communication with the curve surfaces (E) and the inclined surfaces (G). Moreover, referring to FIG. 22, a cutting configuration of the cutting grooves 33 is shown, where bottom edges of the cutting grooves 33 extend into the curve surfaces (E), the inclined surfaces (G) and the bottom surfaces (D). Alternatively, as shown in FIG. 23, another cutting configuration of the cutting grooves 33 is shown, where bottom edges of the cutting grooves 33 extend into the curve surfaces (E) and the inclined surfaces (G). Therefore, the cutting grooves 33 with front and rear openings in each embodiment may be implemented in a manner similar to that shown in FIG. 17, but are not limited thereto. Moreover, the appearance of the screw may slightly vary along with the rotation of the pilot end 4. In the claimed application, the chip-clearing flutes 41 and the cutting grooves 33 are physically in communication with each other or have an area of overlapping projections.

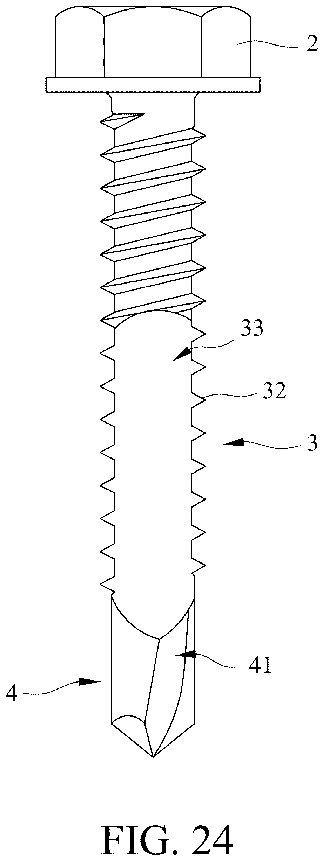

With reference to FIG. 24, in a fifth embodiment which is similar to the fourth embodiment, the cutting grooves 33 are formed at front and rear sides and have a large area. Hence, the thread portion 32 around the cutting grooves 33 may be only at the left and right sides in the front view. Only one cutting groove 33 may be shown in FIG. 24.

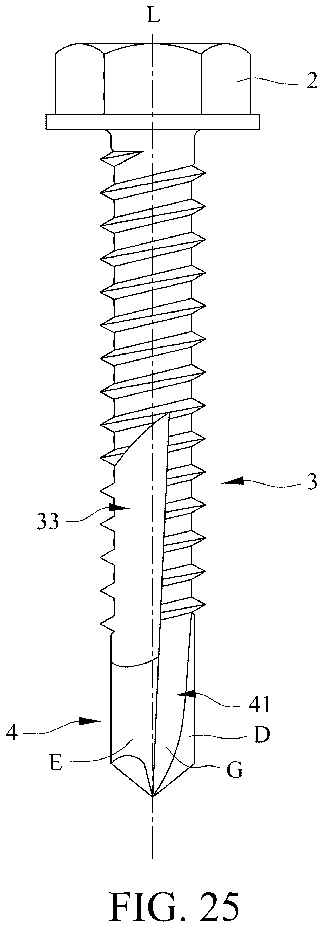

With reference to FIG. 25, in a sixth embodiment, similar to the fifth embodiment, each cutting groove 33 extend downwardly, and the openings of the cutting grooves 33 are front and rear openings, and the opening directions of the cutting grooves 33 are opposite to each other. In this embodiment, the cutting grooves 33 merely overlap the curve surfaces (E) of the corresponding chip-clearing flutes 41. It is noted that the cutting grooves 33 are inclined in the same direction as the thread portion 32 to have the projections thereof intersect the axial line (L) at an angle. In this embodiment, the cutting grooves 33 are physically in communication with the chip-clearing flutes 41. The cutting groove 33 may overlap the curve surface (E) and the inclined surface (G) of the corresponding chip-clearing flute 41. Only one cutting groove 33 may be shown in FIG. 25.

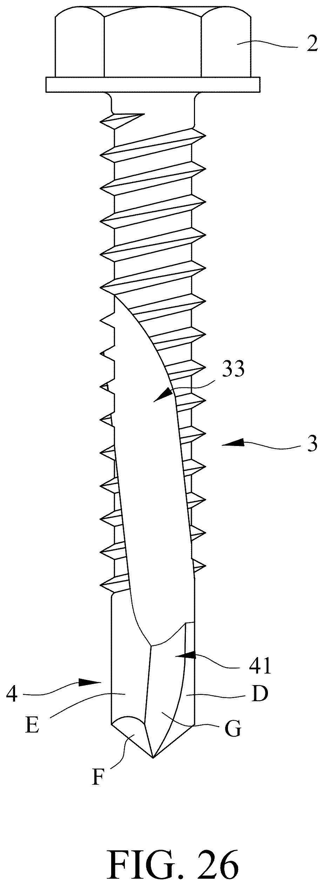

With reference to FIG. 26, in a seventh embodiment, similar to the sixth embodiment, the openings of the cutting grooves 33 are front and rear openings, and the opening directions of the cutting grooves 33 are opposite to each other. In this embodiment, each cutting groove 33 extends in an extending direction, where the extending direction is different from an extending direction in which the corresponding chip-clearing flute 41 extends. That is to say, the cutting grooves 33 are inclined relative to the axial line (L), and the inclining direction thereof is opposite to that of the thread portion 32. Each cutting groove 33 overlaps the curve surface (E), the inclined surface (G) and the bottom surface (D) of the corresponding chip-clearing flute 41 in projection. Only one cutting groove 33 may be shown in FIG. 26.

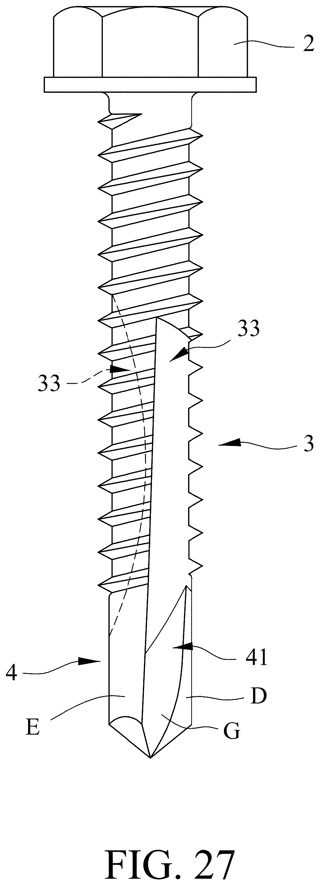

With reference to FIG. 27, an eighth embodiment is illustrated to be similar to the first embodiment. In this embodiment, the openings of the two cutting grooves 33 are front left openings in the front view. That is to say, one cutting groove 33 has a cutting configuration similar to that in the first embodiment, and the other cutting groove 33 has a cutting configuration similar to that in the third embodiment. The cutting groove 33 with the front opening may overlap the curve surface (E), the inclined surface (G) and the bottom surface (D) of the corresponding chip-clearing flute 41 in projection, and overlaps the inclined surface (G) and the bottom surface (D) in this embodiment. Similarly, the cutting groove 33 with the left opening may overlap the curve surface (E), the inclined surface (G) and the bottom surface (D) of the corresponding chip-clearing flute 41 in projection, and overlaps the inclined surface (G) and the bottom surface (D) in this embodiment. That is to say, in the embodiment, the cutting groove 33 with the front opening is formed at the right side, while the cutting groove 33 with the left opening is formed at the left side. Alternatively, the cutting groove 33 with the front opening may be formed at the left side, while the other cutting groove 33 is formed at the right side and has a right opening. Thus, in this embodiment, the cutting grooves 33 are oriented at an angle relative to each other. The cutting groove 33 with the front opening is formed by cutting deep into the bottom of the corresponding chip-clearing flute 41, and the cutting groove 33 with the lateral (left or right) opening is formed by cutting to a depth not more than half of the outer diameter of the thread portion 32. That is to say, the two cutting grooves 33 are not in communication with each other so as to maintain the strength of the screw.

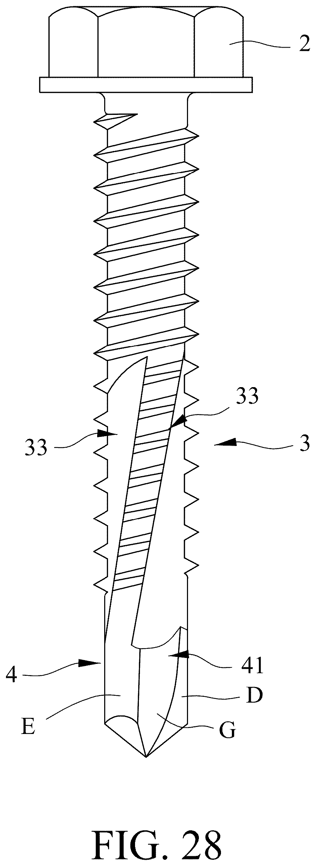

With reference to FIG. 28, in a ninth embodiment, similar to the third embodiment, the openings of the cutting grooves 33 are front and rear openings and the opening directions of the cutting grooves 33 are opposite to each other. In this embodiment, each chip-clearing flute 41 corresponds with two cutting grooves 33. The cutting grooves 33 on the same side may be parallel or non-parallel to each other, and the extending and inclining directions thereof may be the same as or opposite to as those of the thread portion 32. Hence, the thread shank of this embodiment has four of the cutting grooves 33. The cutting groove 33 overlaps the corresponding chip-clearing flute 41 in the projection at an area different from that of the cutting groove 33. For example, the cutting groove 33 at the left side overlaps the curve surface (E) of the corresponding chip-clearing flute 41, while the cutting groove 33 at the right side overlaps the curve surface (E), the inclined surface (G) and the bottom surface (D) of the corresponding chip-clearing flute 41. It is noted that the overlapping projection of the cutting grooves 33 may be the same as or different from those of the cutting grooves 33 at the different side.

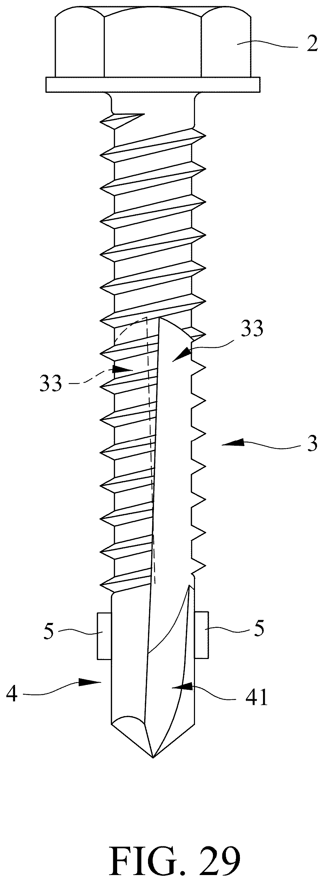

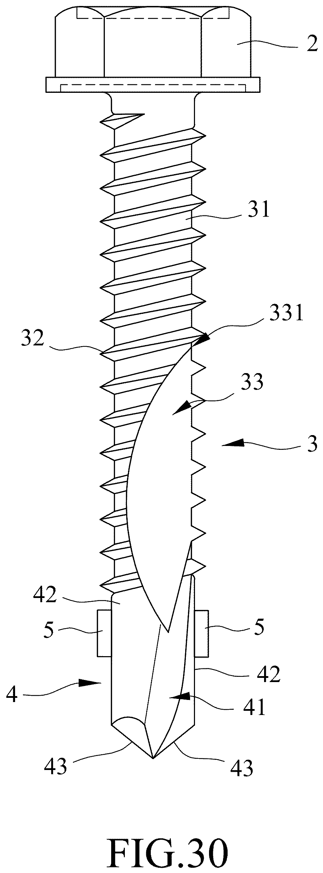

FIG. 29 and FIG. 30 respectively illustrate a tenth embodiment and an eleventh embodiment. In the tenth embodiment, a pair of protrusions 5 are formed at two sides of each chip-clearing flute 41. The protrusions 5 may be formed in pairs, and may be arranged individually. The protrusions 5 have enlarge holes on a fastened non-metallic object to facilitate the cutting grooves 33 for chip removal. The protrusions 5 may be formed adjacent to the chip-clearing flutes 41, as shown in FIG. 29 to achieve better chip removal. Alternatively, the protrusions 5 may be formed on the thread shank 3 as required. It is noted that, although the protrusions 5 are formed in the third embodiment in FIG. 29, the protrusions 5 may be formed in any embodiment of the disclosure. For example, the protrusions 5 may be formed in the first embodiment, as shown in FIG. 30.

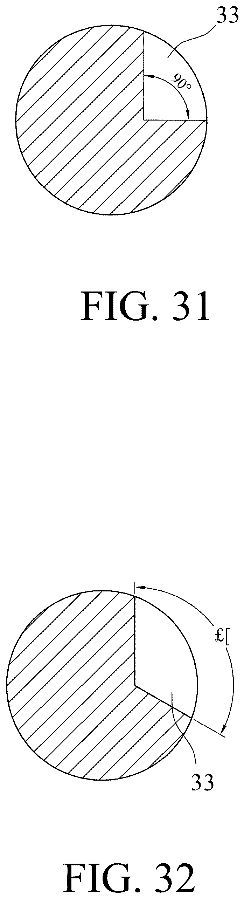

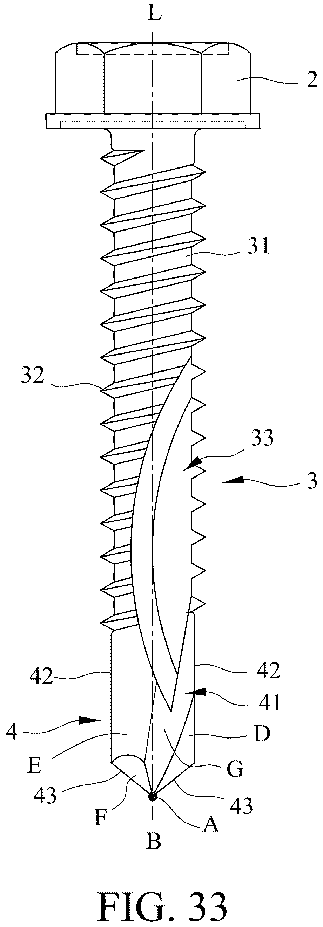

With reference to FIG. 31, the cutting groove 33 is configured to have a right corner, i.e., an angle of 90 degrees. However, as shown in FIG. 32, the cutting groove 33 may be configured to have an inclined corner with an angle (Ω). Without considering cost, an inclined corner with the inclination angle (Ω) may be designed since, for similar chip removal performance, a cutting groove 33 with an inclined corner provides a higher structural strength of the shank body and the pilot end structure. FIG. 33 illustrates a configuration of the cutting groove 33 with an inclined corner (Ω). It is noted that FIG. 33 illustrates one intended application of the cutting groove 33 with an inclined corner (Ω). A variety of configurations may be applied in the disclosure with the cutting grooves 33 having various inclination angles (Ω) or the cutting grooves 33 having the same angle (Ω) but different depth. Additionally, in FIG. 32, only one cutting groove 33 with the inclination angle is illustrated. In application, all the cutting grooves 33 may be ones with the inclination angle (Ω), the right angle, or the inclination angle (Ω) and the right angle. Moreover, the inclination angle (Ω) may be adjusted as required. The inclination angle of the cutting groove 33 may be measured based on the position thereof relative to the thickness of the cutting blade and either half the thread outer diameter or half the diameter at the root. This angle may vary depending on the material of the fastened object. The inclination angle generally ranges from 91 degrees to 175 degrees. In some embodiments, the angle of the inclined corner is not smaller than or larger than an included angle between the inclined surface (G) and the bottom surface (D) of the pilot end 4 for large amount chip removal. All embodiments of the disclosure are illustrated using the cutting grooves 33 as shown in FIG. 31, but may be implemented using the cutting grooves 33 as shown in FIG. 32.

As illustrated, with the chip-clearing flutes 41 in communication with the cutting grooves 33, the cutting capability and chip removal of the self-drilling screw during screwing operations is further enhanced, and the torque required for screwing is reduced, which saves time and effort. Moreover, the self-drilling screw of the disclosure may be screwed into a thick steel plate as compared with the conventional screw, and has multiple uniquely designed variants so as to offer high versatility. The featured self-drilling screw of the disclosure has been repeatedly tested to confirm the effectiveness in achieving the intended purpose.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A self-drilling screw, comprising:
a head (2);
a thread shank (3) including a shank body (31) and a thread portion (32) which projects from an outer peripheral surface of said shank body (31) and extends spirally along said shank body (31), said thread shank (3) being cut with a plurality of cutting grooves (33) which extend axially from said shank body (31) and are formed by cutting through said thread portion (32) into said shank body (31); and
a pilot end (4) extending axially from said shank body (31) away from said head (2) and gradually tapered, said pilot end (4) defining two chip-clearing flutes (41) which face in different directions, each of said chip-clearing flutes (41) being defined by a curve surface (E), an inclined surface (G), a cutting edge surface (F) and a bottom surface (D), said chip-clearing flutes (41) being formed by cutting and extending over said thread portion (32) and said pilot end (4) and by cutting and extending through a portion of said pilot end (4), each of said chip-clearing flutes (41) extending axially along said pilot end (4) and being in communication with a respective one of said cutting grooves (33), **characterized in that**:
a normal vector projection of each of said cutting grooves (33) on an imaginary plane partially overlaps a normal vector projection of a corresponding one of said chip-clearing flutes (41) on the imaginary plane.

2. The self-drilling screw as claimed in claim 1, wherein said thread shank (3) has two of said cutting grooves (33), wherein one of said cutting grooves (33) overlaps said corresponding one of said chip-clearing flutes (41) in an overlapping area which partially coincides with an overlapping area where another one of said cutting grooves (33) overlaps said corresponding one of said chip-clearing flutes (41).

3. The self-drilling screw as claimed in claim 1, wherein said thread shank (3) has two of said cutting grooves (33), wherein one of said cutting grooves (33) overlaps said corresponding one of said chip-clearing flutes (41) in an overlapping area which fully coincides with an overlapping area where another one of said cutting grooves (33) overlaps said corresponding one of said chip-clearing flutes (41).

4. The self-drilling screw as claimed in claim 1, wherein said thread shank (3) has two of said cutting grooves (33), wherein said cutting grooves (33) are oriented in a same opening direction.

5. The self-drilling screw as claimed in claim 1, wherein said thread shank (3) has two of said cutting grooves (33), wherein said cutting grooves (33) are oriented in opposite opening directions.

6. The self-drilling screw as claimed in claim 1, wherein said thread shank (3) has two of said cutting grooves (33), wherein said cutting grooves (33) are oriented at an angle relative to each other.

7. The self-drilling screw as claimed in claim 1, wherein said thread shank (3) has two of said cutting grooves (33), wherein said cutting grooves (33) are parallel to each other and an axial line (L) of said shank body (31) at the radial projection onto a plane.

8. The self-drilling screw as claimed in claim 1, wherein said thread shank (3) has two of said cutting grooves (33), wherein said cutting grooves (33) are inclined relative to each other and an axial line (L) at an angle.

9. The self-drilling screw as claimed in any one of claims 4 to 6, wherein an opening direction of said cutting grooves (33) forms a predetermined rotational angle with a bottom of said pilot end (4).

10. The self-drilling screw as claimed in any one of claims 4 to 6, wherein each of said cutting grooves (33) has a variable width.

11. The self-drilling screw as claimed in claim 1, wherein each of said chip-clearing flute (41) and said corresponding cutting groove (33) extends along an extending line (B) which interconnects an upper cutting point (331) of said cutting groove (33) and a tip (A) of said pilot end (4) when being projected onto an imaginary plane, wherein said extending lines (B) intersect each other at an included angle (C).

12. The self-drilling screw as claimed in claim 1, wherein each of said chip-clearing flute (41) and said corresponding cutting groove (33) extends along an extending line (B) which interconnects an upper cutting point (331) of said cutting groove (33) and a tip (A) of said pilot end (4) when being projected onto an imaginary plane, wherein said extending lines (B) are parallel to each other.

13. The self-drilling screw as claimed in claim 1, further comprising a plurality of protrusions (5) formed at two sides of each of said chip-clearing flutes (41).

14. The self-drilling screw as claimed in claim 1, wherein each of said chip-clearing flutes (41) extends from a tip (A) of said pilot end (4) toward said shank body (31) over said pilot end (4) and has a fixed width.

15. The self-drilling screw as claimed in claim 1, wherein each of said cutting grooves (33) has at least one side not bordered by said thread portion (32).

16. The self-drilling screw as claimed in any one of claims 4 to 6, wherein each of said cutting grooves (33) has a depth which is not more than a difference between a peak of said thread portion (32) and said bottom surface (D) of said corresponding one of said chip-clearing flutes (41).

17. The self-drilling screw as claimed in claim 1, wherein each of said cutting grooves (33) extends in an extending direction, wherein said extending direction is different from an extending direction in which said corresponding one of said chip-clearing flutes (41) extends.

18. The self-drilling screw as claimed in claim 1, wherein each of said cutting grooves (33) extends in an extending direction, wherein said extending direction is same as an extending direction in which said corresponding one of said chip-clearing flutes (41) extends.

19. The self-drilling screw as claimed in any one of claims 2 to 8, wherein each of said cutting grooves (33) is configured to have an inclined corner, and an angle of said inclined corner is not smaller than an included angle between said inclined surface (G) and said bottom surface (D) of said pilot end (4).

20. The self-drilling screw as claimed in any one of claims 2 to 8, wherein each of said cutting grooves (33) is configured to have a right corner.

21. The self-drilling screw as claimed in claim 1, wherein said thread portion (32) has a proximal section which is proximal to said pilot end (4) and which is gradually tapered to have a width same as a width at a junction between said pilot end (4) and said thread portion (32).

22. The self-drilling screw as claimed in claim 1, wherein said pilot end (4) has one of a flat shape, a cylindrical shape and a spiral shape.

23. The self-drilling screw as claimed in claim 1, wherein said chip-clearing flutes (41) of said pilot end (4) are surrounded by said thread portion (32).

24. The self-drilling screw as claimed in any one of claims 2 to 8, wherein an overlapping area where each of said cutting grooves (33) overlaps with said corresponding chip-clearing flute (41) has a length which is 1/3 to 1/2 of a length of said pilot end (4).

25. The self-drilling screw as claimed in any one of claims 4 to 6, wherein each of said cutting grooves (33) has a fixed width.
